# EUROPÄISCHE PATENTANMELDUNG

(11) **EP 1 881 340 A2**
(43) Veröffentlichungstag der Anmeldung: **23.01.2008**
(21) Anmeldenummer: 07013642.9
(22) Anmeldetag: 12.07.2007
(51) Int. Cl.: G01S 5/14, G01S 5/00

(54) **Ortungssystem zur Ortung der Position eines Werkzeugs**

(30) Priorität: 18.07.2006 DE 102006034270
(71) Anmelder: C. & E. Fein GmbH, 73529 Schwäbisch Gmünd-Bargau (DE)
(72) Erfinder: Schreiber, Alfred, 73230 Kirchheim (DE)
(74) Vertreter: Gahlert, Stefan

(57) **Zusammenfassung**

Es werden ein Ortungssystem und ein Verfahren zur Ortung eines Werkzeugs angegeben, insbesondere eines handgeführten Schraubers, bei dem eine Freifeldortung zur Erfassung der absoluten Position des Werkzeugs (10, 42, 44) durchgeführt wird, und bei dem eine Relativortung zur relativen Positionsbestimmung des Werkzeugs (10, 42, 44) durch Verfolgung der Bewegung des Werkzeugs (10, 42, 44) relativ zu einer bekannten Referenzposition durchgeführt wird und mit dem Ergebnis der Freifeldortung kombiniert wird, um die Position des Werkzeugs (10, 42, 44) zu bestimmen.

## Beschreibung

Die Erfindung betrifft ein Ortungssystem zur Ortung eines Werkzeugs, insbesondere eines handgeführten Schraubers.

Im Stand der Technik sind verschiedene Verfahren bekannt, um die Position von handgeführten Werkzeugen zu erfassen.

Gemäß der DE 199 01 334 A1 ist eine Einrichtung zur Erfassung der Position eines handgeführten Werkzeugs bekannt, die einen Rechner und ein Sensorsystem aufweist, wobei sich das Sensorsystem im, am oder in der Nähe des Werkzeugs befindet, Positionsänderungen des Werkzeugs vom Sensorsystem erfasst werden, wobei die Lage eines oder mehrerer möglicher Arbeitsorte an einem zu bearbeitenden Objekt bekannt ist und die mittels eines Rechners ermittelte Position mit den möglichen Arbeitsorten eines bekannten Objekts verglichen wird.

Das Sensorsystem arbeitet mit Trägheitssensoren, deren Abweichung von einem bekannten Ausgangspunkt erfasst und mit dem Rechner bestimmt wird.

Eine Positionserfassung mittels Trägheitssensoren (Inertial-Sensoren) ist auch aus der DE 103 12 154 A1 und aus der DE 10 2004 046 000 A1 bekannt. Mittels Inertial-Sensoren lassen sich so Bewegungen von Objekten bei bekannter Ausgangsposition überwachen.

Die gebräuchlichen Inertialsysteme weisen allerdings aufgrund bauartbedingter Drift nur kleine Arbeitsräume auf. Das bedeutet, dass eine Ortung über längere Zeiträume (größer 5 Sekunden) und größere Wege (größer 50 Zentimeter) keine ausreichende Genauigkeit aufweist.

Darüber hinaus ist es im Stand der Technik grundsätzlich bekannt, eine absolute Position eines Objektes durch Freifeldortung zu bestimmen. Dies kann etwa durch Ultraschallmessungen, durch Laufzeitmessungen, durch optische Systeme oder durch ein GPS-System erfolgen.

Allerdings setzen derartige Freifeldortungssysteme in der Regel eine direkte Verbindung zu mehreren Objekten voraus, um etwa durch Laufzeitmessungen die Position zu bestimmen.

Beim Anziehen von Schrauben in der Kfz-Montage kommt es immer wieder zu fehlerhaften Schraubverbindungen, da die genaue Zuordnung der Schrauber zur Rohkarosse nicht ausreichend geprüft wird.

Wie oben dargelegt bietet die Verwendung von Inertialsystemen bei Relativortung keine ausreichende Genauigkeit über größere Wege bzw. Zeiten. Dagegen lassen sich Freifeldortungssysteme zur absoluten Positionsbestimmung dann nicht mehr einsetzen, wenn innerhalb eines Bauteils durch Abschattung keine direkte Verbindung nach außen zur Positionsbestimmung möglich ist.

Der Erfindung liegt somit die Aufgabe zugrunde, ein verbessertes Ortungssystem zur Ortung der Position eines Werkzeugs und ein verbessertes Verfahren zur Ortung der Position eines Werkzeugs anzugeben, womit eine sichere und ausreichend genaue Ortung eines Werkzeugs ermöglicht ist.

Diese Aufgabe wird erfindungsgemäß durch ein Ortungssystem zur Ortung der Position eines Werkzeugs, insbesondere eines handgeführten Schraubers zur Bearbeitung eines Werkstücks, gelöst, mit einem ersten System zur Freifeldortung zur absoluten Positionsbestimmung des Werkzeugs und mit einem zweiten System zur Relativortung zur relativen Positionsbestimmung durch Verfolgung einer Bewegung des Werkzeugs relativ zu einer bekannten Referenzposition, wobei das erste System und das zweite System zur Ortung des Werkzeugs miteinander gekoppelt sind.

Die Aufgabe der Erfindung wird ferner durch ein Verfahren zur Ortung eines Werkzeugs, insbesondere eines handgeführten Schraubers, gelöst, bei dem eine Freifeldortung zur Erfassung der absoluten Position des Werkzeugs durchgeführt wird, und bei dem eine Relativortung zur relativen Positionsbestimmung des Werkzeugs durch Verfolgung der Bewegung des Werkzeugs relativ zu einer bekannten Referenzposition durchgeführt wird und mit dem Ergebnis der Freifeldortung kombiniert wird, um die Position des Werkzeugs zu bestimmen.

Die Aufgabe der Erfindung wird auf diese Weise vollkommen gelöst.

Indem nämlich eine Freifeldortung des Werkzeugs mit einer Relativortung zur relativen Positionsbestimmung durch Verfolgung der Bewegung des Werkzeugs relativ zu einer bekannten Referenzposition kombiniert wird, können die Vorteile beider Ortungssysteme benutzt werden. So kann immer dann, wenn eine Freifeldortung durch Abschattung des Werkzeuges nicht ermöglicht ist, auf die Relativortung zurückgegriffen werden, um ausgehend von einer zuvor mittels einer Freifeldortung ermittelten bekannten Ausgangsposition mittels Relativortung die Endposition zu ermitteln. So kann beispielsweise auch bei der Verschraubung von Rohkarossen sichergestellt werden, dass sämtliche Verschraubungsstellen nacheinander angefahren werden. Mittels der Relativortung kann nämlich sehr präzise unabhängig von einem Positionier-Leitsystem auch innerhalb von abgeschirmten bzw. nicht einsehbaren Räumen gearbeitet werden, um eine Folge von Verschraubungsstellen abzuarbeiten.

Ferner wird durch die Verwendung des Freifeldortungssystems eine langzeitstabile Ortung gewährleistet. Hierdurch kann ein sicheres Anfahren eines Werkstückes, etwa einer Rohkarosse, an einem Montageband gewährleistet werden. So kann etwa zunächst eine Referenzposition angefahren werden, von der aus Einzelverschraubungen am Werkstück unter Verwendung der Relativortung abgearbeitet werden.

In vorteilhafter Weiterbildung der Erfindung ist eine durch Freifeldortung bestimmte Position des Werkzeugs dem zweiten System als Referenzposition für eine Relativortung zugeführt.

So kann ausgehend von einer präzise mittels Freifeldortung bestimmten Position eine entsprechend genaue Relativortung auf kurzen Wegen durchgeführt werden.

Gemäß einer weiteren Ausführung der Erfindung ist eine Mehrzahl von Basisstationen vorgesehen, vorzugsweise mindestens drei Basisstationen, die mit dem Werkzeug über direkte Signalwege zur Freifeldortung gekoppelt sind.

Das System kann hierbei zur Freifeldortung etwa die Auswertung von Ultraschallsignalen, von Laufzeitmessungen, und/oder von GPS-Signalen oder optischen Signalen umfassen.

So kann unter Verwendung von drei Basisstationen bei direkten Signalwegen eine Freifeldortung im dreidimensionalen Raum erfolgen. Besteht eine Verbindung nur zu zwei Basisstationen, so kann eine Freifeldortung im zweidimensionalen Raum durchgeführt werden.

Hierbei ist das Werkzeug vorzugsweise mit den Basisstationen über Signale gekoppelt, deren Laufzeit ausgewertet wird, um eine absolute Position des Werkzeugs im Raum zu bestimmen.

Gemäß einer weiteren Ausgestaltung der Erfindung ist eine von der Freifeldortung bestimmte Information zur absoluten Position im zweiten System zugeführt und wird zum Zwischenabgleich der von dem Relativortungssystem bestimmten relativen Position verwendet.

Auf diese Weise können Fehler, die bei der Relativortung aufgrund von bauartbedingter Drift oder aufgrund von größeren Wegen auftauchen, ermittelt und korrigiert werden.

Gemäß einer weiteren Ausführung der Erfindung umfasst das Ortungssystem eine Mehrzahl von Werkzeugen, die mit einer Mehrzahl von Basisstationen zur Freifeldortung durch direkte Kommunikation mit den Basisstationen gekoppelt sind, wobei einzelne Werkzeuge als Relaisstationen zur Verbindung mit anderen Werkzeugen ausgebildet sind, die einen direkten Kontakt mit diesen Werkzeugen und den einzelnen Basisstationen haben.

Auf diese Weise kann dann, wenn etwa ein Werkzeug zwar mit zwei Basisstationen direkten Kontakt hat, jedoch gegenüber der dritten Basisstation abgeschattet ist, über ein anderes Werkzeug, das in direktem Kontakt mit der betreffenden Basisstation steht, die notwendige Information zur absoluten Positionsbestimmung über das andere Werkzeug übertragen werden.

Das zweite System zur Relativortung ist vorzugsweise ein trägheitsbasiertes System, das vorzugsweise am Werkzeug vorgesehene Inertial-Sensoren und Drehratensensoren aufweist.

Auf diese Weise können unter Verwendung von bekannten Algorithmen sehr genaue Ortungen durchgeführt werden.

Gemäß einer weiteren Ausgestaltung der Erfindung weist jedes Werkzeug ein Funkmodul auf, das zur Datenkommunikation ausgebildet ist und mit einer Mehrzahl von Basisstationen kommuniziert, um auf der Basis von Laufzeitinformationen eine absolute Positionsbestimmung zu ermöglichen, und bei dem jedes Werkzeug ferner ein Inertialmodul für die Relativortung aufweist.

Bei dem erfindungsgemäßen Verfahren wird ferner gemäß einer vorteilhaften Weiterbildung der Erfindung eine durch die Freifeldortung bestimmte Position als eine Referenzposition für die Relativortung benutzt.

Hierdurch kann die Genauigkeit der Positionsbestimmung gesteigert werden, sofern ausgehend der durch Freifeldortung bestimmten Referenzposition nur noch kurze Wege mittels der Relativortung erfasst werden müssen.

Gemäß einer weiteren Ausgestaltung des erfindungsgemäßen Verfahrens wird eine durch Freifeldortung bestimmte Position des Werkzeugs als Zwischenreferenzpunkt mit der durch Relativortung bestimmten Position des Werkzeugs verglichen.

Auf diese Weise können Fehler der Relativortung erkannt und korrigiert werden und insgesamt die Genauigkeit der Relativortung deutlich gesteigert werden.

Wie bereits erwähnt umfasst das Verfahren zur Freifeldortung vorzugsweise die Auswertung von Ultraschallsignalen, von Ortszeitmessungen, und/oder von GPS-Signalen oder von optischen Signalen, wobei das Werkzeug insbesondere mit einer Mehrzahl von Basisstationen gekoppelt sein kann, deren Laufzeit ausgewertet wird, um eine absolute Position des Werkzeugs im Raum zu bestimmen.

Es versteht sich, dass die vorstehend genannten und die nachstehend noch zu erläuternden Merkmale der Erfindung nicht nur in der jeweils angegebenen Kombination, sondern auch in anderen Kombinationen verwendbar sind, ohne den Rahmen der Erfindung zu verlassen.

Weitere Merkmale und Vorteile der Erfindung ergeben sich aus der nachfolgenden Beschreibung bevorzugter Ausführungsbeispiele unter Bezugnahme auf die Zeichnung. Es zeigen:
- Figur 1: eine schematische Darstellung eines erfindungsgemäßen Werkzeuges, das ein kombiniertes System zur Freifeldortung und Relativortung aufweist und mit drei Basisstationen über direkte Kommunikationswege gekoppelt ist;
- Figur 2: ein stark vereinfachtes Blockschaltbild eines inertialen Systems zur Relativortung des Werkzeugs gemäß Figur 1; und
- Figur 3: eine schematische Darstellung eines erfindungsgemäßen Ortungssystems mit drei Werkzeugen und drei Basisstationen, wobei sich ein Werkzeug innerhalb eines Werkstückes befindet, durch das eine Abschattung erfolgt.

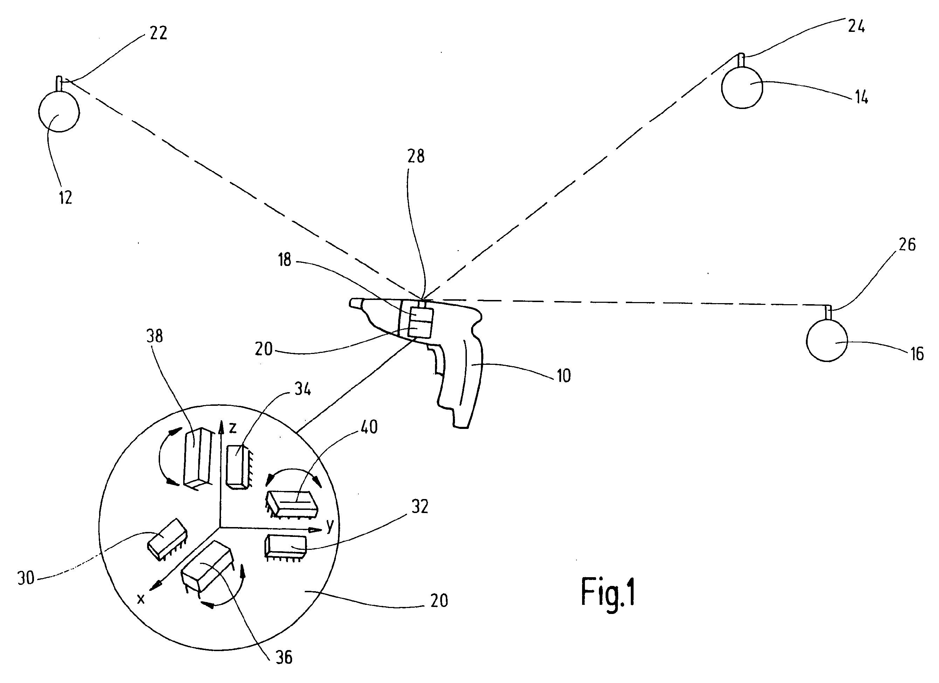

In Figur 1 ist ein erfindungsgemäßes Ortungssystem schematisch dargestellt, das ein Werkzeug 10 in Form eines Schraubers aufweist, der mit drei Basisstationen 12, 14, 16 in direkter Kommunikationsverbindung steht. Das Werkzeug 10 weist ein Funkmodul 18 und ein Inertialmodul 20 auf, die miteinander gekoppelt sind. Das Funkmodul 18 steht über einer Antenne 28 in direkter Funkverbindung mit den Antennen 22, 24, 26 externer Basismodule 12, 14, 16, deren Position bekannt ist.

Das Funkmodul 18 kann nun durch Laufzeitmessungen die absolute Position der Antenne 28 bestimmen.

Sollte eine lagegenaue Bestimmung der Position des Werkzeugs 10 erforderlich sein, so sind mindestens drei Antennen erforderlich, die mit den Basisstationen in direkter Funkverbindung stehen, um so drei Punkte des Werkzeugs im Raum und damit die absolute Lage des Werkzeugs 10 im Raum zu bestimmen.

Für die meisten Anwendungen ist es jedoch ausreichend, wenn lediglich die Position eines Punktes des Werkzeugs 10 bestimmt wird.

Das Werkzeug 10 weist ferner ein insgesamt mit der Ziffer 20 bezeichnetes Inertialmodul auf, das jeweils drei Beschleunigungssensoren 30, 32, 34, die die Messung von Beschleunigungen in x-Richtung, y-Richtung und z-Richtung erlauben, und ferner die drei Drehratensensoren 36, 38, 40 auf, durch die Drehungen um die x-Achse, um die y-Achse und die z-Achse erfasst werden können. Mit Hilfe eines Zeitgebers kann aus den Signalen der Beschleunigungssensoren 30, 32, 34 durch einfache Integration über die Zeit die Position des Werkzeugs 10 bestimmt werden, vorausgesetzt, dass die Position des Werkzeugs 10 zum Zeitpunkt P = 0 als Ursprung bzw. Bezugspunkt definiert ist. Durch eine zweite Integration über die Zeit kann sogar die Trajektorie des Systems, das heißt die Bahn des Systems, ermittelt werden, die das Werkzeug 10 im Raum, das heißt bezüglich seiner Umwelt, durchläuft. Zur Integration und zur Zeiterfassung ist ein Zeitgeber erforderlich.

Ferner können drei Drehratensensoren 36, 38, 40 vorhanden sein, die Informationssignale liefern, die den Winkelgeschwindigkeiten entsprechen. Über das Vorzeichen der Winkelgeschwindigkeit lässt sich der Drehsinn ermitteln. Mit Hilfe der Drehratensensoren kann die Orientierung des Werkzeugs 10 bestimmt werden.

Aus der DE 103 12 154 A1 ist ein Verfahren bekannt, das sich zur Orientierungsbestimmung lediglich dreier Drehratensensoren bedient. Nach diesem Verfahren sind keine weiteren Sensoren zur Bestimmung der Orientierung eines Objekts im Raum erforderlich. Ein solches Verfahren kann zur Bestimmung der Orientierung des Werkzeuges 10 verwendet werden.

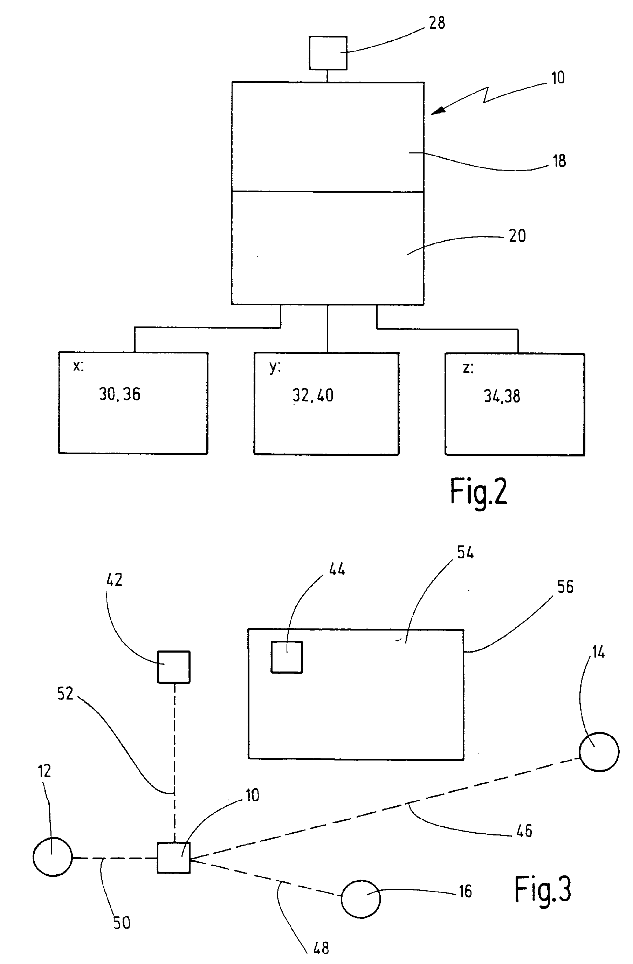

Figur 2 zeigt schematisch ein Werkzeug 10 mit einem derartigen System zur Bestimmung der Relativortung in Form eines Inertialmoduls 20, das mit einem Funkmodul 18 gekoppelt ist. An das Funkmodul 18 ist eine Antenne 28 angekoppelt. Das Inertialmodul 20 ermöglicht mittels der drei Beschleunigungssensoren (Inertial-Sensoren) 30, 32, 34 und mittels der drei Drehratensensoren 36, 38, 40 eine präzise Verfolgung der Position und der Ausrichtung des Werkzeugs bezüglich der x-Achse, y-Achse und z-Achse ausgehend von einer bekannten Referenzposition.

In Figur 3 ist das Zusammenwirken des ersten Systems zur Freifeldortung mit dem zweiten System zur Relativortung schematisch dargestellt.

Ein erstes Werkzeug 10 steht über sein Funkmodul mit drei ortsfesten Basisstationen 12, 14, 16 über direkte Kommunikationsverbindungen 46, 48, 50 in Verbindung.

So kann durch Laufzeitmessung die absolute Position des Werkzeugs 10 präzise ermittelt werden.

Das System umfasst ein zweites Werkzeug 42 und ein drittes Werkzeug 44. Das Werkzeug 42 steht lediglich mit den Basisstationen 12 und 16 in direktem Funkkontakt, ist jedoch gegenüber der Basisstation 14 durch ein Werkstück 54 abgeschattet (in Figur 3 ist der Bereich der Funkabdeckung durch 56 gekennzeichnet).

Wegen der fehlenden Verbindung zur zweiten Basisstation 14 steht das zweite Werkzeug 42 über eine Kommunikationsverbindung 52 mit dem Werkzeug 10 in Verbindung.

Um die absolute Position des Werkzeugs 42 zu ermitteln, wird das Werkzeug 10 als weitere (dynamische) Basisstation verwendet, da die Position des Werkzeugs 10 absolut bekannt ist. Das Werkzeug 10 dient somit als dritter Bezugspunkt für das Werkzeug 42.

Das dritte Werkzeug 44 befindet sich innerhalb des Werkstücks 54, wobei es sich beispielsweise um eine Rohkarosse handeln kann, die an verschiedenen Stellen verschraubt werden muss. Da das Werkzeug 44 keine Funkverbindung mit den Basisstationen 12, 14, 16 hat, kann innerhalb des Bereiches 56 der Funkabschattung keine Freifeldortung durchgeführt werden.

Hierbei dient eine zuvor angefahrene Position des Werkzeugs 44 in unmittelbarer Nachbarschaft des Bereiches 56 der Funkabschattung als Referenzposition, von der ausgehend mittels des Inertialmoduls die einzelnen Positionen des Werkzeugs 44, die nacheinander angefahren werden müssen, innerhalb des Werkstücks 54 präzise ermittelt werden.

## Patentansprüche

1. Ortungssystem zur Ortung eines Werkzeugs (10, 42, 44), insbesondere eines handgeführten Schraubers, mit einem ersten System zur Freifeldortung zur absoluten Positionsbestimmung des Werkzeugs (10, 42, 44) und mit einem zweiten System zur Relativortung zur relativen Positionsbestimmung durch Verfolgung einer Bewegung des Werkzeugs (10, 42, 44) relativ zu einer bekannten Referenzposition, wobei das erste und das zweite System zur Ortung des Werkzeugs (10, 42, 44) miteinander gekoppelt sind.

2. Ortungssystem nach Anspruch 1, bei dem eine durch Freifeldortung bestimmte Position des Werkzeugs (10, 42, 44) dem zweiten System als Referenzposition für eine Relativortung zugeführt ist.

3. Ortungssystem nach einem der vorhergehenden Ansprüche, bei dem eine Mehrzahl von Basisstationen (12, 14, 16), vorzugsweise mindestens drei Basisstationen (12, 14, 16), vorgesehen sind, die mit dem Werkzeug (10, 42, 44) über direkte Signalwege (46, 48, 50) zur Freifeldortung gekoppelt sind.

4. Ortungssystem nach einem der vorhergehenden Ansprüche, bei dem das System zur Freifeldortung die Auswertung von Ultraschallsignalen, von Laufzeitmessungen, und/oder von GPS-Signalen oder von optischen Signalen umfasst.

5. Ortungssystem nach Anspruch 3 oder 4, bei dem das Werkzeug (10, 42, 44) mit den Basisstationen (12, 14, 16) über Signale gekoppelt wird, deren Laufzeit ausgewertet wird, um eine absolute Position des Werkzeugs (10, 42, 44) im Raum zu bestimmen.

6. Ortungssystem nach einem der vorhergehenden Ansprüche, bei dem eine von der Freifeldortung bestimmte Information zur absoluten Position dem zweiten System zugeführt ist und zum Zwischenabgleich der von dem Relativortungssystem bestimmten relativen Position verwendet ist.

7. Ortungssystem nach einem der vorhergehenden Ansprüche, mit einer Mehrzahl von Werkzeugen (10, 42, 44), die mit einer Mehrzahl von Basisstationen (12, 14, 16) zur Freifeldortung durch direkte Kommunikation mit den Basisstationen (12, 14, 16) gekoppelt sind, wobei einzelne Werkzeuge als Relaisstationen zur Verwendung von anderen Werkzeugen ausgebildet sind, die keinen direkten Kontakt mit einzelnen Basisstationen haben.

8. Ortungssystem nach einem der vorhergehenden Ansprüche, bei dem das zweite System zur Relativortung ein trägheitsbasiertes System ist, das vorzugsweise am Werkzeug (10, 42, 44) vorgesehene Inertial-Sensoren (30, 32, 34) und/oder Drehratensensoren (36, 38, 40) aufweist.

9. Ortungssystem nach einem der vorhergehenden Ansprüche, bei dem jedes Werkzeug ein Funkmodul (18) aufweist, das zur Datenkommunikation ausgebildet ist und mit einer Mehrzahl von Basisstationen (12, 14, 16) kommuniziert, um auf der Basis von Laufzeitinformationen eine absolute Positionsbestimmung zu ermöglichen, und bei dem jedes Werkzeug ferner ein Inertialmodul (20) für die Relativortung aufweist.

10. Verfahren zur Ortung eines Werkzeugs (10, 42, 44), insbesondere eines handgeführten Schraubers, bei dem eine Freifeldortung zur Erfassung der absoluten Position des Werkzeugs (10, 42, 44) durchgeführt wird, und bei dem eine Relativortung zur relativen Positionsbestimmung des Werkzeuges (10, 42, 44) durch Verfolgung der Bewegung des Werkzeugs (10, 42, 44) relativ zu einer bekannten Referenzposition durchgeführt wird und mit dem Ergebnis der Freifeldortung kombiniert wird, um die Position des Werkzeugs (10, 42, 44) zu bestimmen.

11. Verfahren nach Anspruch 10, bei dem eine durch die Freifeldortung bestimmte Position als eine Referenzposition für die Relativortung benutzt wird.

12. Verfahren nach Anspruch 10 oder 11, bei dem eine durch Freifeldortung bestimmte Position des Werkzeugs (10, 42, 44) als Zwischenreferenzpunkt mit der durch Relativortung bestimmten Position des Werkzeugs (10, 42, 44) verglichen wird.

13. Verfahren nach einem der Ansprüche 10 bis 12, bei dem das Verfahren zur Freifeldortung die Auswertung von Ultraschallsignalen, von Laufzeitmessungen, und/oder von GPS-Signalen oder von optischen Signalen umfasst.

14. Verfahren nach einem der Ansprüche 10 bis 13, bei dem ein Werkzeug (10, 42, 44) mit einer Mehrzahl von Basisstationen (12, 14, 16), vorzugsweise mit mindestens drei Basisstationen (12, 14, 16), zur Freifeldortung gekoppelt wird.

15. Verfahren nach einem der Ansprüche 10 bis 14, bei dem das Werkzeug mit den Basisstationen über Signale gekoppelt, deren Laufzeit ausgewertet wird, um eine absolute Position des Werkzeugs (10, 42, 44) im Raum zu bestimmen.

16. Verfahren nach einem der Ansprüche 10 bis 15, bei dem die Position einer Mehrzahl von Werkzeugen (10, 42, 44) durch Freifeldortung mittels direkter Kommunikation mit einer Mehrzahl von Basisstationen (12, 14, 16) überwacht wird, und wobei zumindest ein Werkzeug (42), das nicht in direktem Kontakt mit einer Basisstation (14, 16) steht, die bekannte Ortsinformation eines anderen Werkzeuges (10), das in direktem Kontakt mit dem Werkzeug (42) steht, zur Freifeldortung verwendet.

17. Verfahren nach einem der Ansprüche 10 bis 16, bei dem das Verfahren zur Relativortung ein trägheitsbasiertes Verfahren ist, das vorzugsweise Signale von Inertial-Sensoren (30, 32, 34) und Drehratensensoren (36, 38, 40) an den Werkzeugen (10, 42, 44) auswertet.
